# EUROPÄISCHE PATENTSCHRIFT

(11) **EP 2 655 124 B1**
(45) Veröffentlichungstag und Bekanntmachung des Hinweises auf die Patenterteilung: **25.05.2016**
(21) Anmeldenummer: 11782396.3
(22) Anmeldetag: 12.11.2011
(51) Int. Cl.: B60N 2/07, B60N 2/015, B60N 2/28

(54) **SITZSCHIENE FÜR EINEN FAHRZEUGSITZ EINES KRAFTWAGENS SOWIE HALTEANORDNUNG EINES HALTEELEMENTS EINES FAHRZEUGSITZES AN EINER SITZSCHIENE**
SEAT RAIL FOR A VEHICLE SEAT OF A MOTOR VEHICLE AND RETAINING ARRANGEMENT OF A RETAINING ELEMENT OF A VEHICLE SEAT ON A SEAT RAIL
RAIL DE SIÈGE POUR UN SIÈGE DE VÉHICULE D'UNE VOITURE ET ENSEMBLE DE RETENUE D'UN ÉLÉMENT DE RETENUE D'UN SIÈGE DE VÉHICULE SUR UN RAIL DE SIÈGE

(30) Priorität: 21.12.2010 DE 102010055364
(43) Veröffentlichungstag der Anmeldung: 30.10.2013
(73) Patentinhaber: Johnson Controls Components GmbH & Co. KG, 67657 Kaiserslautern (DE)
(72) Erfinder: KINZER, Andreas, 66424 Homburg (DE); MÜHLBERGER, Joachim, 67271 Obersülzen (DE); NAßHAN, Jürgen, 67655 Kaiserslautern (DE); PROBST, Peter, 70734 Fellbach (DE); WILLEMS, Boris, 66839 Schmelz (DE)
(74) Vertreter: Wilhelm, Wolfgang
(86) Internationale Anmeldenummer: PCT/EP2011/005706
(87) Internationale Veröffentlichungsnummer: WO 2012/084094

(56) Entgegenhaltungen:
- DE-U1- 20 019 891
- FR-A1- 2 771 350
- US-A- 6 036 252

## Beschreibung

Die Erfindung betrifft einen Fahrzeugsitz eines Kraftwagens der im Oberbegriff des Patentanspruchs 1 angegebenen Art.

Aus dem Serienbau von Kraftwagen ist es bekannt, einen Fahrzeugsitz mittels wenigstens einer Sitzschiene an der Karosserie des Kraftwagens zu halten. Mittels der Sitzschiene ist der Fahrzeugsitz in einer Mehrzahl von unterschiedlichen Längspositionen in Fahrzeuglängsrichtung an der Sitzschiene sowie in Fahrzeughochrichtung an derselbigen arretierbar (siehe z.B. die DE 200 19 891 U1, dem Oberbegriff entsprechend).

Insbesondere bei Kleintransportern ist es bekannt, dass ein solcher Fahrzeugsitz von der Sitzschiene gelöst und aus einem Fahrgastraum entnommen werden kann, um so beispielsweise den Stauraum zu vergrößern. Das Lösen von der Sitzschiene und das Entnehmen des Fahrzeugsitzes erfolgt dabei zumindest im Wesentlichen in Fahrzeughochrichtung, was einen verbesserungswürdigen Betätigungskomfort darstellt.

Aus der FR 2 771 350 A1 ist ein Befestigungselement für einen Fahrzeugsitz bekannt, mittels welchem der Fahrzeugsitz an einer Fahrzeugstruktur befestigbar und von der Fahrzeugstruktur lösbar ist.

Aus der o.g. DE 200 19 891 U1 ist ein Befestigungselement für einen Fahrzeugsitz bekannt, mittels welchem der Fahrzeugsitz in mehreren diskreten Positionen an einer Fahrzeugstruktur befestigbar und von der Fahrzeugstruktur lösbar ist.
Es ist daher Aufgabe der vorliegenden Erfindung, einen Fahrzeugsitz eines Kraftwagens bereitzustellen, welche einen verbesserten Betätigungskomfort ermöglichen.

Diese Aufgabe wird durch einen Fahrzeugsitz eines Kraftwagens mit den Merkmalen des Patentanspruchs 1 gelöst. Vorteilhafte Ausgestaltungen mit zweckmäßigen Weiterbildungen der Erfindung sind in den abhängigen Ansprüchen angegeben.

Die Erfindung betrifft einen Fahrzeugsitz eines Kraftwagens, insbesondere eines Personenkraftwagens, aufweisend eine Sitzschiene mit einem Sitzschienenprofil, welches wenigstens einen Profilbereich aufweist, in den wenigstens ein korrespondierendes Halteelement des Fahrzeugsitzes in zumindest einer Haltestellung einsetzbar ist.

Erfindungsgemäß ist vorgesehen, dass die Sitzschiene wenigstens ein zur Längserstreckung des Sitzschienenprofils schräg verlaufendes Rampenelement umfasst, mittels welchem das Halteelement durch Bewegen dieses entlang des Rampenelements von der Haltestellung aus dem Profilbereich heraus in wenigstens eine Entnahmestellung bewegbar ist. Über dieses Rampenelement kann das Halteelement und damit der gesamte Fahrzeugsitz besonders komfortabel in den Profilbereich hinein- und aus diesem herausbewegt werden. Dabei ist des lediglich erforderlich, auf das Halteelement bzw. den Fahrzeugsitz eine Kraft auszuüben, deren Wirkungsrichtung zumindest im Wesentlichen parallel zur Sitzschiene verläuft. Eine Krafteinwirkung auf den Fahrzeugsitz zumindest im Wesentlichen in Fahrzeughochrichtung, um diesen aus dem Profilbereich heraus- bzw. in diesen hineinzubewegen, ist damit nicht von Nöten. Mit anderen Worten muss ein Nutzer des Kraftwagens den Fahrzeugsitz nicht zumindest im Wesentlichen in Fahrzeughochrichtung aus dem Profilbereich heraus- bzw. in diesen hineinheben. Vielmehr kann das Halteelement und damit der gesamte Fahrzeugsitz durch die erfindungsgemäße Sitzschiene besonders einfach und komfortabel und damit mit einem besonders hohen Betätigungskomfort aus dem Profilbereich hinaus- und in diesen hineinbewegt, insbesondere geschoben, werden.

So ist es durch den erfindungsgemäßen Fahrzeugsitz auf einfache Art und Weise möglich, das Halteelement und damit den gesamten Fahrzeugsitz auf besonders einfache Art und Weise von der Sitzschiene zu lösen und aus einen Fahrgastraum des Kraftwagens zu bewegen, um den Stauraum in dem Fahrgastraum zu vergrößern. Ebenso ist es möglich, den demontierten und ausgebauten Sitz über das Halteelement wieder auf besonders einfache und komfortable Art und Weise in Wirkverbindung mit der Sitzschiene zu verbringen und dadurch den Fahrzeugsitz im Fahrgastraum zu montieren und zu arretieren, so dass dieser über die erfindungsgemäße Sitzschiene zumindest im Wesentlichen in Fahrzeughochrichtung festgehalten ist.

Der Fahrzeugsitz mit der Sitzschiene ermöglicht eine sogenannte Längsverstellung des Fahrzeugsitzes. Dies bedeutet, dass der Sitz zwischen einer Mehrzahl von Stellungen zumindest im Wesentlichen in Fahrzeuglängsrichtung verstellbar und in diesen Stellungen an der Sitzschiene in Fahrzeuglängsrichtung sowie in Fahrzeughochrichtung arretierbar ist. Dadurch kann eine für einen Sitzinsassen bequeme Sitzposition aufgefunden werden.

Bei einer vorteilhaften Ausführungsform der Erfindung umfasst das Halteelement wenigstens eine um eine Drehachse drehbare Rolle, über welche das Halteelement und darüber der Fahrzeugsitz zumindest mittelbar an dem Sitzschienenprofil abrollbar sind. Dadurch kann der Fahrzeugsitz zum Bewegen dieses in die Entnahmestellung bzw. von der Entnahmestellung in die Haltestellung besonders komfortabel und rückenschonend für den Nutzer bewegt werden, da der Nutzer nicht das komplette Gewicht des Fahrzeugsitzes anheben muss. Dies ist insbesondere deswegen von Vorteil, da in einem Fahrzeug, in welchem der Fahrzeugsitz angeordnet ist, selten eine entsprechende Höhe gegeben ist, die ein aufrechtes Stehen des Nutzers ermöglicht.

Ein weiterer Vorteil des erfindungsgemäßen Fahrzeugsitzes ist, dass eine Position des Halteelements relativ zur Sitzschiene zum Entnehmen des Fahrzeugsitzes von der Sitzschiene nicht zeitaufwändig gesucht werden muss. Vielmehr kann der Fahrzeugsitz und damit das Halteelement durch einfaches Bewegen entlang des Sitzschienenprofils zu dem Rampenelement und entlang des Rampenelements in die Entnahmestellung bewegt werden. Dies ist von Vorteil, da das Rampenelement und damit eine Entnahmestelle, an welcher der Fahrzeugsitz von der Sitzschiene entnommen werden kann, zumindest nahezu stets und zumindest bereichsweise unter dem Fahrzeugsitz angeordnet und somit von dem Nutzer nicht einzusehen ist bzw. der Nutzer es beispielsweise nicht immer sehen kann, wenn die Entnahmestelle erreicht ist.

Die zuvor geschilderte Rolle birgt ferner den Vorteil, dass der Sitz auch außerhalb des Kraftwagens sowie dann besonders einfach zu manövrieren und zu bewegen ist, wenn er sich in der Entnahmestellung an dem Sitzschienenprofil befindet. Befindet sich der Fahrzeugsitz in der Entnahmestellung, so kann er über die Rolle besonders einfach an dem Sitzschienenprofil entlang bewegt und aus dem Kraftwagen hinaus bewegt werden. Beim Einsetzen und in Wirkverbindung bringen des Sitzes über das Halteelement mit der Sitzschiene sind durch die erfindungsgemäße Sitzschiene die gleichen im Bezug zur Entnahme des Fahrzeugsitzes geschilderten Vorteile erreicht, da der Fahrzeugsitz auch bei einem Einbau, insbesondere bei einem Wiedereinbau, in den Fahrgastraum besonders einfach und komfortabel zu bewegen ist. Dabei ist die Entnahmestelle, über welche der Fahrzeugsitz auch wieder an die Sitzschiene montiert wird, besonders einfach zu finden und das Gewicht des Fahrzeugs muss zumindest teilweise nur über die Rolle bewegt werden.

Darüber hinaus ist erfindungsgemäss wenigstens ein Rampenelement vorgesehen, mittels welchem das Halteelement durch Bewegen dieses entlang des Rampenelements von der Haltestellung aus dem Profilbereich heraus in wenigstens eine Entnahmestellung bewegbar ist.

Hierdurch ist weiterhin ein besonders leichter Ausbau und Einbau des Fahrzeugsitzes in einen Fahrgastraum eines Fahrzeugs, insbesondere des Kraftwagens ermöglicht, wobei der Fahrzeugsitz zum Einbau oder Ausbau nicht durch einen Nutzer zumindest im Wesentlichen in Fahrzeughochrichtung gehoben oder gehalten werden muss. Zum Bewegen des Sitzes in die Entnahmestellung ist es lediglich erforderlich, den Sitz entlang des Sitzschienenprofils zu drücken und/oder zu ziehen, wodurch er quasi selbständig über das Rampenelement in die Entnahmestellung bewegt wird. In der Entnahmestellung befindet sich der Fahrzeugsitz dabei in Fahrzeughochrichtung auf einem höheren Höhenniveau als in der Haltestellung. Mit anderen Worten wird der Fahrzeugsitz bei dessen Bewegung von der Haltestellung in die Entnahmestellung in Fahrzeughochrichtung nach oben, d.h. in Richtung eines gegebenenfalls vorhandenen Daches des Kraftwagens, bewegt bzw. umgekehrt wird der Fahrzeugsitz bei dessen Bewegung von der Entnahmestellung in die Haltestellung in Fahrzeughochrichtung in Richtung eines Bodens des Kraftwagens bewegt. Daraus ist es ersichtlich, dass der erfindungsgemässe Fahrzeugsitz mit Halteanordnung und Sitzschiene eine besonders einfache und für den Nutzer leichte Bewegung des Fahrzeugsitzes insbesondere in Fahrzeughochrichtung ermöglicht, ohne dass der Nutzer den Fahrzeugsitz zumindest im Wesentlichen in Fahrzeughochrichtung anheben oder absenken muss. Die Halteanordnung ermöglicht damit insbesondere eine besonders rückenschonende Betätigung des Fahrzeugsitzes insbesondere bei dessen Entnahme von oder in Wirkverbindung bringen mit der Sitzschiene.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: ausschnittsweise eine schematische Perspektivansicht einer Sitzschiene für einen Fahrzeugsitz eines Kraftwagens, mit einem Sitzschienenprofil und mit einem zur Längserstreckung des Schienenprofils schräg verlaufendes Rampenelement, mittels welchem ein Halteelement des Fahrzeugsitzes und damit der Fahrzeugsitz durch Bewegen des Halteelements bzw. des Fahrzeugsitzes entlang des Rampenelements zumindest im Wesentlichen in Fahrzeughochrichtung in eine Entnahmestellung bewegbar ist;
- Fig. 2: ausschnittsweise das Sitzschienenprofil gemäß Fig. 1;
- Fig. 3: ein Rampenelement für eine linksseitige und ein Rampenelement für eine rechtsseitige Sitzschiene gemäß Figur 1;
- Fig. 4: eine Brücke für eine linksseitige Sitzschiene und eine Brücke für eine rechtsseitige Sitzschiene gemäß Fig. 1;
- Fig. 5: jeweils ausschnittsweise vier schematische Perspektivansichten einer Halteanordnung eines Fahrzeugsitzes an einer linksseitigen und einer rechtsseitigen Sitzschiene gemäß Fig. 1, wobei der Fahrzeugsitz von einer Haltestellung in eine Entnahmestellung bewegt wird;
- Fig. 6: vier schematische Seitenansichten der Halteanordnung gemäß Fig. 5;
- Fig. 7: jeweils ausschnittsweise vier schematische Seitenansichten der Halteanordnung gemäß den Fig. 5 und 6, wobei der Fahrzeugsitz an den Sitzschienen entlang bewegt wird;

- Fig. 8: eine schematische Perspektivansicht eines Halteelements des Fahrzeugsitzes der Halteanordnung gemäß der Fig. 5 bis 7;
- Fig. 9: eine schematische Seitenansicht des Halteelements gemäß Fig. 8, welches entriegelt ist;
- Fig. 10: eine schematische Querschnittsansicht des entriegelten Halteelements gemäß Fig. 9, welches in eine Sitzschiene gemäß Fig. 1 eingesetzt und mit einem Fahrzeugsitz der Halteanordnung gemäß den Fig. 5 bis 7 verbunden ist;
- Fig. 11: eine schematische Seitenansicht des Halteelements gemäß Fig. 8, welches verriegelt ist und
- Fig. 12: eine schematische Querschnittsansicht des verriegelten Halteelements gemäß Fig. 11, welches in eine Sitzschiene gemäß Fig. 1 eingesetzt und mit einem Fahrzeugsitz der Halteanordnung gemäß den Fig. 5 bis 7 verbunden ist.

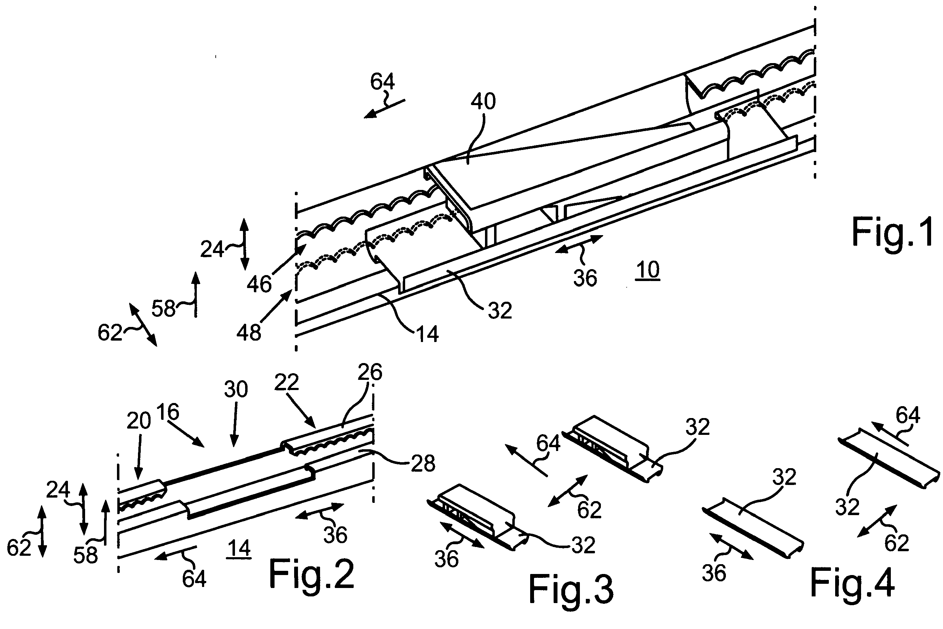

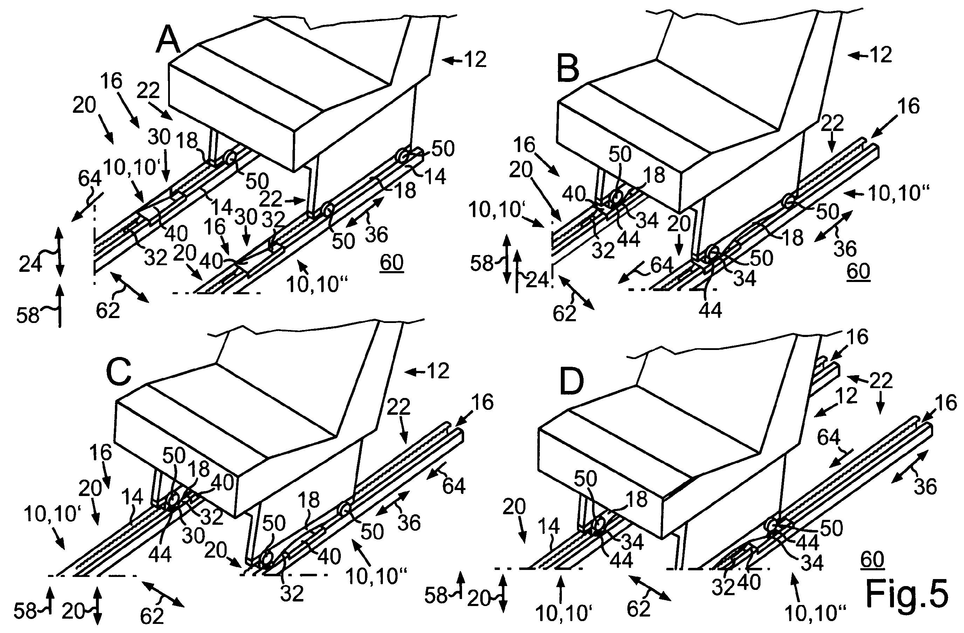

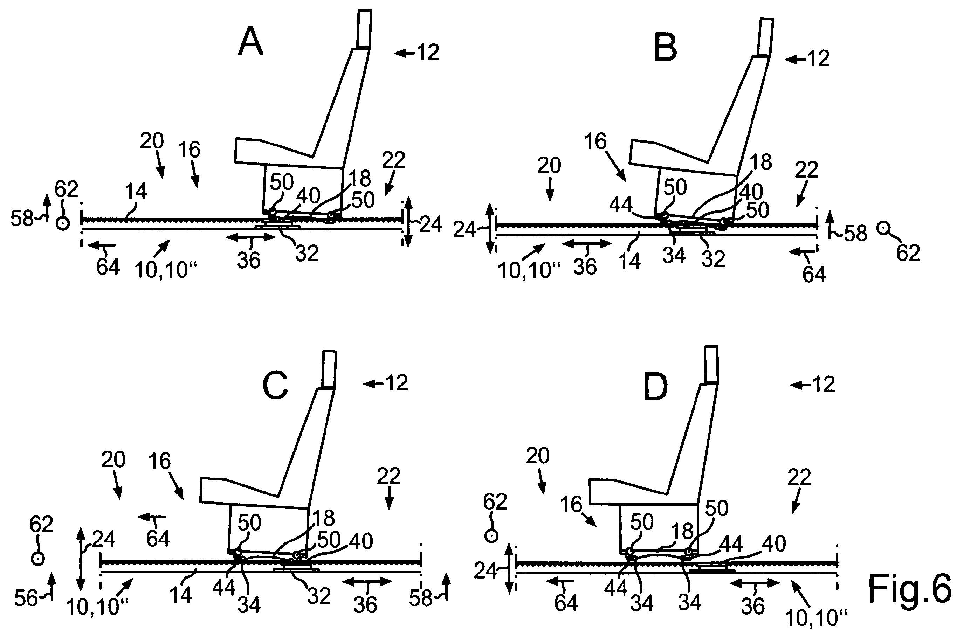

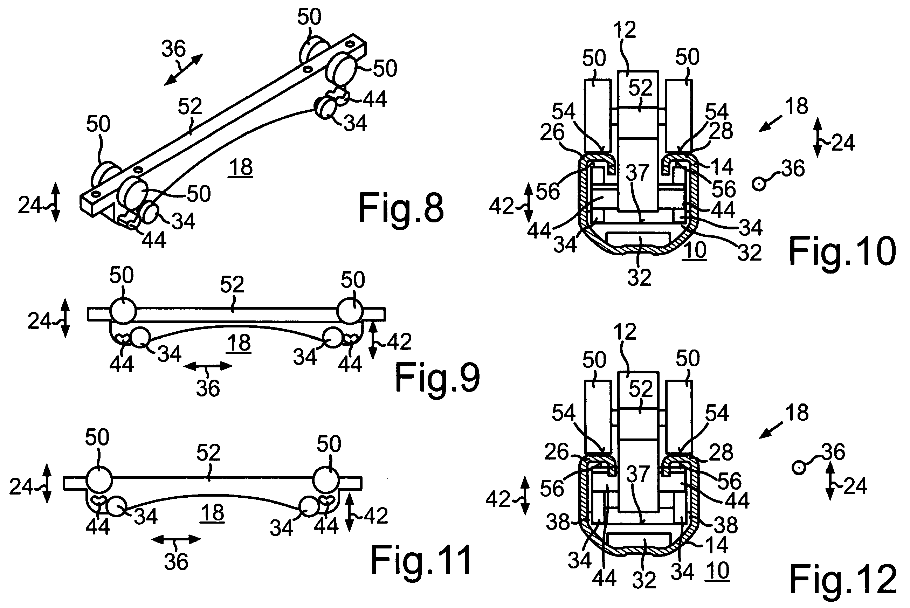

Die Fig. 1 zeigt eine Sitzschiene 10 für einen Fahrzeugsitz 12 (Fig. 5 bis 12), welche ein Sitzschienenprofil 14 umfasst, das auch in Fig. 2 dargestellt ist. Das Sitzschienenprofil 14 umfasst einen Profilbereich 16, in welchen ein Halteelement 18 (Fig. 8 bis 12) des Fahrzeugsitzes 12 einsetzbar ist. In Teilbereichen 20 und 22 weist der Profilbereich 16 eine Aufnahme auf, welche in Hochrichtung der Sitzschiene 10 gemäß einem Richtungspfeil 24 und damit in Fahrzeughochrichtung nach oben geschlossen ist. Wie insbesondere den Fig. 10 und 12 zu entnehmen ist, weist das beispielsweise aus Metall oder Kunststoff ausgebildete Sitzschienenprofil 14 dazu Wandungen 26 und 28 auf, welche zumindest im Wesentlichen U-förmig ausgebildet sind, wobei die U-Form zwei zumindest im Wesentlichen parallel zueinander verlaufende Schenkel und einen quer dazu und diese Schenkel verbindenden Schenkel aufweist, wobei der quer verlaufende Schenkel die Aufnahme nach oben hin abdeckt und damit schließt. Dadurch ist es ermöglicht, dass der Fahrzeugsitz 12 über das Halteelement 18 zumindest im Wesentlichen in Fahrzeughochrichtung an der Sitzschiene 10 arretierbar bzw. arretiert ist.

Zwischen den Teilbereichen 20 und 22 ist eine Entnahmeöffnung 30 vorgesehen, über welche der Fahrzeugsitz von der Sitzschiene 10 entnommen und dadurch aus einem Fahrgastraum eines Fahrzeugs, insbesondere eines Personenkraftwagens, bewegt werden kann. Wie der Fig. 2 zu entnehmen ist, sind in Längsrichtung des Sitzschienenprofils 14 gemäß einem Richtungspfeil 36, welche zumindest im Wesentlichen mit der Fahrzeuglängsrichtung übereinstimmt, die Schenkel 26 und 28 nicht vorgesehen, so dass das Halteelement 18 und damit der Fahrzeugsitz 12 von der Sitzschiene 10 entnommen werden können.

Die Sitzschiene 10 umfasst ein Brückenelement 32, welches in dem Sitzschienenprofil 14 angeordnet ist. Das Brückenelement 32 stellt für untere Rollen 34 des Halteelements 18 eine zumindest im Wesentlichen ebene Rollfläche 37 sowie seitliche Führungen 38 bereit.

Ferner umfasst die Sitzschiene 10 ein Rampenelement 40. Wie der Fig. 1 zu entnehmen ist, verläuft das Rampenelement 40 zur Längserstreckung des Sitzschienenprofils 14 gemäß dem Richtungspfeil 36 schräg und ist in Hochrichtung auf dem Brückenelement 32 im Bereich der Entnahmeöffnung 30 angeordnet.

Wie insbesondere den Fig. 8 bis 12 zu entnehmen ist, umfasst das Halteelement 18 in Hochrichtung gemäß einem Richtungspfeil 42 bewegbare Rastelemente 44, welche zwischen einer in den Fig. 9 und 10 gezeigten Entriegelungsstellung und einer in den Fig. 11 und 12 gezeigten Verriegelungsstellungen bewegbar sind. Wie der Fig. 12 zu entnehmen ist, wirken die Rastelemente 44 in der Verriegelungsstellung mit Wellenprofilen 46 und 48 des Sitzschienenprofils zusammen, so dass das Halteelement 18 und damit der Fahrzeugsitz 12 in Längsrichtung der Sitzschiene 10 gemäß einem Richtungspfeil 36 und damit in Fahrzeuglängsrichtung arretiert ist. Dadurch ist es auch ermöglicht, den Fahrzeugsitz 12 zwischen einer Mehrzahl von Stellungen in Fahrzeuglängsrichtung zu verstellen, so dass eine für einen Insassen des Fahrzeugsitzes 12 angenehme Sitzposition einzustellen ist.

In der Entriegelungsstellung wirken die Rastelemente 44 nicht mit den Wellenprofilen 46 und 48 zusammen, so dass das Halteelement 18 und damit der Fahrzeugsitz 12 in Längsrichtung der Sitzschiene 10 gemäß dem Richtungspfeil 36 und damit in Fahrzeuglängsrichtung bewegt werden können.

Um den Fahrzeugsitz 12 besonders einfach und damit komfortabel in Längsrichtung gemäß dem Richtungspfeil 36 bewegen zu können, umfasst das Halteelement 18 oberseitige Rollen 50, welche in Hochrichtung gemäß dem Richtungspfeil 24 zumindest bereichsweise oberhalb der Rollen 34 angeordnet sind. Wie die Rollen 34 sind auch die Rollen 50 um eine jeweilige Drehachse drehbar an einem Grundkörper 52 des Halteelements 18 angeordnet, wobei die Drehachsen der Rollen 50 in Hochrichtung gemäß dem Richtungspfeil 24 oberhalb der Drehachsen der Rollen 34 angeordnet sind. Das Halteelement 18 rollt beim Bewegen des Fahrzeugsitzes 12 in Längsrichtung gemäß dem Richtungspfeil 36 an dem Sitzschienenprofil 14 ab. Dazu sind durch die Wandungen 26 und 28 Flächen 54 bereitgestellt, welche als Rollflächen fungieren. Wie insbesondere den Fig. 10 und 12 zu entnehmen ist, sind die Flächen 54 gegenüber von Flächen 56 der Wandungen 26 und 28 angeordnet, wobei die Flächen 54 und 56 durch den quer zu den zumindest im Wesentlichen parallel zueinander verlaufenden Schenkeln verlaufenden Schenkel der U-Form gebildet sind.

Wie ebenfalls insbesondere den Fig. 10 und 12 zu entnehmen ist, dienen sowohl die Rastelemente 44 als auch die unterseitigen Rollen 34 dazu, insbesondere in den Teilbereichen 20 und 22 des Sitzschienenprofils 14 das Halteelement 18 und damit den Fahrzeugsitz 12 in Hochrichtung gemäß dem Richtungspfeil 24 und damit in Fahrzeughochrichtung an der Sitzschiene 10 zu arretieren. Dazu werden die Rollen 34 und die Rastelemente 44 zumindest bereichsweise von den Wandungen 26 und 28 überdeckt und sind dazu zumindest bereichsweise in der Aufnahme der Teilbereiche 20 und 22 aufgenommen. Mit anderen Worten verhindern die Rollen 34 und die Rastelemente 44, dass das Halteelement 18 aus dem Sitzschienenprofil 14 herausgenommen wird, da die Rastelemente 44 sowie die Rollen 34 in Kontakt mit den Wandungen 26 und 28 kommen würden, wenn der Fahrzeugsitz mit dem Halteelement 18 in Hochrichtung gemäß dem Richtungspfeil 24 nach oben gemäß einem Richtungspfeil 58 bewegt werden würde, und wenn sich zumindest der Rollen 34 und/oder ein Teil der Rastelemente 44 in dem Teilbereich 20 oder dem Teilbereich 22 des Sitzschienenprofils 14 befinden würden.

Um ein solches Entnehmen des Fahrzeugsitzes 12 und des Halteelements 18 zu ermöglichen, ist die Entnahmeöffnung 30 vorgesehen. Wird das Halteelement 18 entlang der Sitzschiene 10 gemäß dem Richtungspfeil 36 derart bewegt, dass sich die Rollen 34 und die Rastelemente 44 im Bereich der Entnahmeöffnung 30 befinden und nicht mehr von den Wandungen 26 und 28 in Hochrichtung nach oben hin überdeckt werden, so kann das Halteelement 18 aus dem Sitzschienenprofil entnommen und der Fahrzeugsitz 12 aus dem Fahrgastraum ausgebaut werden. Dazu umgekehrt ist es möglich, das Halteelement 18 wieder in das Sitzschienenprofil 14 einzusetzen, indem die Rollen 34 und die Rastelemente 44 über die Entnahmeöffnung 30 in das Sitzschienenprofil 14 und damit in den Profilbereich 16 eingesetzt werden. Werden dann der Fahrzeugsitz 12 und das Halteelement 18 in Längsrichtung gemäß dem Richtungspfeil 36 bewegt, so dass die Rastelemente 44 und/oder die Rollen 34 zumindest bereichsweise bzw. teilweise von den Wandungen 26 und 28 nach oben überdeckt werden, so ist der Fahrzeugsitz 12 wieder über das Halteelement 18 an der Sitzschiene 10 zumindest in Fahrzeughochrichtung gemäß dem Richtungspfeil 24 arretiert und nicht mehr aus dem Sitzschienenprofil 14 und damit aus dem Profilbereich 16 entnehmbar.

Um dieses Entnehmen und Einsetzen des Fahrzeugsitzes 12 bzw. des Halteelements 18 besonders einfach und mit einem hohen Betätigungskomfort zu ermöglichen, ist das Rampenelement 32 vorgesehen. Die Fig. 5 bis 7 zeigen eine Halteanordnung 60 des Fahrzeugsitzes 12 an einer in Fahrzeugquerrichtung gemäß einem Richtungspfeil 62 bezogen auf eine Vorwärtsfahrtrichtung gemäß einem Richtungspfeil 64 rechtsseitigen Sitzschiene 10' und einer linksseitigen Sitzschiene 10". Die Sitzschienen 10' und 10" entsprechen dabei der Sitzschiene 10, so dass das zuvor sowie im Folgenden zur Sitzschiene 10 Geschilderte auch auf die Sitzschienen 10' und 10" zutrifft.

Die Fig. 5 zeigt gemäß Darstellung A den Fahrzeugsitz 12 in einer Haltestellung an der Sitzschiene 10, in welcher der Fahrzeugsitz 12 nicht von der Sitzschiene 12 entnommen werden kann, da die Rollen 34 und die Rastelemente 44 von den Wandungen 26 und 28 nach oben hin überdeckt werden.

Um den Fahrzeugsitz 12 aus dem Fahrgastraum bewegen zu können, wird der Fahrzeugsitz 12 in Längsrichtung gemäß dem Richtungspfeil 36 in Richtung der Entnahmeöffnung 30 der Sitzschiene 10 bewegt, wobei zunächst lediglich die Rollen 50 auf den Flächen 54 abrollen.

Der Fahrzeugsitz 12 wird dabei so lange auf die Entnahmeöffnung zu bewegt, bis die Rollen 34 gegebenenfalls das Brückenelement 32 berühren und auf der Lauffläche 36 seitlich durch die Führungen 38 geführt abrollen. Die Rollen 34 müssen jedoch nicht notwendigerweise mit dem Brückenelement 32 in Kontakt kommen. Wird der Fahrzeugsitz 12 weiter in Richtung der Entnahmeöffnung 30 bewegt, so kommen die Rollen 34 mit dem Rampenelement 40 in Kontakt und können zumindest auf diesem abrollen.

Gemäß Darstellung B der Fig. 5 rollen die Rollen 34 auf dem Rampenelement 40 ab und werden wie auch der Fahrzeugsitz 12 aufgrund des schrägen Verlaufs in Hochrichtung gemäß dem Richtungspfeil 24 nach oben hin gemäß dem Richtungspfeil 58 bewegt, so dass die Rollen 50 von den Wandungen 26 und 28 abheben bis schließlich die unteren Rollen 34 auf den Flächen 54 abrollen können.

Gemäß Darstellung C und D kann somit der Fahrzeugsitz 12 nach oben gemäß dem Richtungspfeil 58 bewegt werden, ohne dass ein Nutzer des Kraftwagens den Sitz in Fahrzeughochrichtung nach oben anheben muss. Der Fahrzeugsitz 12 kann über die Rollen 34 weiter bewegt und insbesondere aus dem Fahrgastraum hinausbewegt werden. Außerhalb des Fahrgastraums und damit des Kraftwagens ermöglichen die Rollen 34 eine weitere, besonders einfache Manövrierung und Bewegung des Fahrzeugsitzes 12.

Auf ebenso einfache Art und Weise ist das Halteelement 18 wieder in das Sitzschienenprofil 14 einsetzbar, wobei das Halteelement 18 über die Rollen 34 und das Rampenelement 40 wieder einfach in die Haltestellung gemäß Darstellung A zu rollen ist.

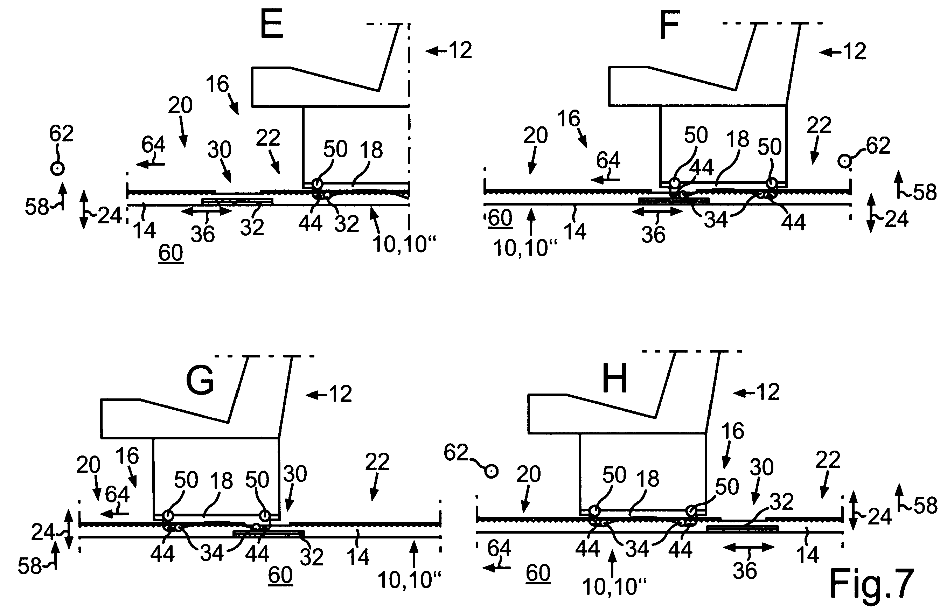

Die Fig. 7 zeigt in Darstellungen E, F, G und H, dass der Fahrzeugsitz 12 über das Halteelement 18 und die Rollen 50 auf einfache Art und Weise über die Entnahmeöffnung 30 hinweggerollt werden kann, wenn das Rampenelement 40 der Sitzschiene 10 entfernt ist. Ohne das Rampenelement 40 werden die Rollen 34 und damit der Fahrzeugsitz 12 nicht nach oben gemäß dem Richtungspfeil 58 bewegt, so dass die Rollen 34 und die Rastelemente 40 in dem Profilbereich 16 und damit in dem Sitzschienenprofil 14 verbleiben und somit von dem Teilbereich 22 auch in den Teilbereich 20 bzw. umgekehrt bewegt werden können zur Darstellung unterschiedlicher Stellungen des Fahrzeugsitzes 12 in Fahrzeuglängsrichtung gemäß dem Richtungspfeil 36.

Die Sitzschiene 10 kann dabei eine Entnahmeöffnung wie die Entnahmeöffnung 30 oder eine Mehrzahl von Entnahmeöffnungen wie die Entnahmeöffnung 30 aufweisen, um den Fahrzeugsitz 12 an einer oder mehreren Stellen entnehmen oder in das Sitzschienenprofil 14 einsetzen zu können.

Das Rampenelement 40 ist beispielsweise als Einlegeteil ausgebildet und kann dadurch auf einfache Art und Weise im Bereich der Entnahmeöffnung 30 eingelegt bzw. entfernt werden. Ebenso möglich ist es, dass das Rampenelement 40 in die Sitzschiene 10 bzw. das Sitzschienenprofil 14 integriert ist und über wenigstens ein Scharnier und/oder klappenartig bewegt werden kann, um das geschilderte einfache Entnehmen des Fahrzeugsitzes 12 von der Sitzschiene 10 zu bewirken oder nicht (Fig. 7). Ebenso kann auch das Brückenelement 32 als Einlegeteil oder in die Sitzschiene 10 bzw. das Sitzschienenprofil 14 integriert sein.

Darüber hinaus kann ein Deckelelement vorgesehen sein, um die Entnahmestellung 30 zumindest bereichsweise abzudecken. Dies verbessert den optischen Eindruck der Sitzschiene 10, wenn ein Entnehmen bzw. ein Einsetzen des Fahrzeugsitzes 12 von bzw. in die Sitzschiene 10 nicht erwünscht ist.

In jeglicher Hinsicht ermöglicht es die Sitzschiene 10, den Fahrzeugsitz 12 in Hochrichtung der Sitzschiene 10 und damit Fahrzeughochrichtung und damit gemäß dem Richtungspfeil 24 zu bewegen und zwar derart, dass ein Nutzer eines Kraftwagens eine Kraft auf dem Fahrzeugsitz 12 aufbringen muss, welche lediglich zumindest im Wesentlichen in Längsrichtung gemäß dem Richtungspfeil 36 wirkt. Der Nutzer muss dabei keine Kraft auf den Fahrzeugsitz 12 aufbringen, welche zumindest im Wesentlichen in Hochrichtung und damit in Fahrzeughochrichtung gemäß dem Richtungspfeil 24 wirkt. Mit anderen Worten muss der Nutzer den Fahrzeugsitz 12 nicht anheben oder absenken, um diesen über das Halteelement 18 in den Profilbereich 16 des Sitzschienenprofils 14 der Sitzschiene 10 einzusetzen oder entsprechend zu entnehmen.

## Patentansprüche

1. Fahrzeugsitz (12) eines Kraftwagens, aufweisend eine Sitzschiene (10, 10', 10"') mit einem Sitzschienenprofil (14), welches wenigstens einen Profilbereich (16, 20, 22) aufweist, in den wenigstens ein korrespondierendes Halteelement (18) des Fahrzeugsitzes (12) in zumindest eine Haltestellung einsetzbar ist, wobei der Fahrzeugsitz (12) zwischen einer Mehrzahl von Stellungen zumindest im Wesentlichen in Fahrzeuglängsrichtung verstellbar und in diesen Stellungen an der Sitzschiene (10, 10', 10'") in Fahrzeuglängsrichtung sowie in Fahrzeughochrichtung arretierbar ist,
**dadurch gekennzeichnet, dass**
die Sitzschiene (10, 10', 10"') wenigstens ein zur Längserstreckung (36) des Sitzschienenprofils (14) schräg verlaufendes Rampenelement (40) umfasst, mittels welchem das Halteelement (18) durch Bewegen dieses entlang des Rampenelements (40) von der Haltestellung aus dem Profilbereich (16, 20, 22) heraus in wenigstens eine Entnahmestellung bewegbar ist.

2. Fahrzeugsitz (12) nach Anspruch 1,
**dadurch gekennzeichnet, dass**
das der Profilbereich (16, 20, 22) zumindest eine in Hochrichtung (24) der Sitzschiene (10, 10', 10"') zumindest bereichsweise nach oben geschlossene Aufnahme aufweist, mittels welcher das Halteelement (18) in der Haltestellung in Hochrichtung (24) an dem Sitzschienenprofil (14) arretiert oder arretierbar ist, wobei sich an den ersten Profilbereich (16, 20, 22) ein weiterer Profilbereich des Sitzschienenprofils (14) anschließt, welcher eine Entnahmestelle (30) aufweiset, über die (30) das Halteelement (18) durch Bewegen dieses (18) entlang des Rampenelements (40) von der Haltestellung aus der Aufnahme des ersten Profilbereich (16, 20, 22) heraus in die Entnahmestellung bewegbar ist.

3. Fahrzeugsitz (12) nach Anspruch 2,
**dadurch gekennzeichnet, dass**
der weitere Profilbereich an der Entnahmestelle (30) in Hochrichtung (24) der Sitzschiene (10, 10', 10"') geöffnet ausgebildet ist.

4. Fahrzeugsitz (12) nach einem der Ansprüche 2 oder 3,
**dadurch gekennzeichnet, dass**
die Sitzschiene 10 wenigstens ein Rampenelement (40) umfasst, mittels welchem das Halteelement (18) durch Bewegen dieses entlang des Rampenelements (40) von der Haltestellung aus dem Profilbereich (16, 20, 22) heraus in wenigstens eine Entnahmestellung bewegbar ist, dass das Haltelement (18) um eine Drehachse drehbare untere Rollen (34) umfasst, mittels welcher das Halteelement (18) von der Haltestellung in die Entnahmestellung zumindest bereichsweise rollbar ist, und dass das Halteelement (18) oberseitige Rollen (50) umfasst, welche in Hochrichtung zumindest bereichsweise oberhalb der unteren Rollen (34) angeordnet sind.

5. Fahrzeugsitz (12) nach Anspruch 4,
**dadurch gekennzeichnet, dass**
das Halteelement (18) beim Bewegen von der Haltestellung in die Entnahmestellung über die unteren Rollen (34) zumindest mittelbar an dem Sitzschienenprofil (14) und/oder an dem Rampenelement (40) abrollt.

6. Fahrzeugsitz (12) nach einem der Ansprüche 4 oder 5,
**dadurch gekennzeichnet, dass**
die unteren Rollen (34) in der Haltestellung von dem Profilbereich (16, 20, 22) in Hochrichtung (24) der Sitzschiene (10, 10', 10"') zumindest bereichsweise überdeckt sind.

7. Fahrzeugsitz (12) nach Anspruch 6,
**dadurch gekennzeichnet, dass**
das Halteelement (18) über die um eine Drehachse drehbare oberseitige Rolle (50) zumindest bereichsweise beim Bewegen entlang des Sitzschienenprofils (14) auf einer der unteren Rolle (34) abgewandten Seite (54) des Profilsbereichs (16, 20, 22) an diesem abrollt.

## Claims

1. A vehicle seat (12) of a motor vehicle, comprising a seat rail (10, 10', 10''') having a seat rail profile (14) which has at least one profile region (16, 20, 22) in which at least one corresponding retaining element (18) of the vehicle seat (12) can be introduced in at least one retaining position, wherein the vehicle seat (12) can be displaced between a plurality of positions at least substantially in the longitudinal direction of the vehicle and can be locked in those positions on the seat rail (10, 10', 10''') in the longitudinal direction of the vehicle and in the vertical direction of the vehicle,
**characterized in that**
the seat rail (10, 10', 10''') comprises at least one ramp element (40) which extends obliquely relative to the longitudinal extent (36) of the seat rail profile (14) and by means of which the retaining element (18) can be moved into at least one removal position by being moved along the ramp element (40) from the retaining position out of the profile region (16, 20, 22).

2. The vehicle seat (12) as claimed in claim 1,
**characterized in that**
the profile region (16, 20, 22) has at least one receiving member which is closed upwardly at least in regions in a vertical direction (24) of the seat rail (10, 10', 10"') and by means of which the retaining element (18) is locked or can be locked on the seat rail profile (14) in the retaining position in a vertical direction (24), wherein an additional profile region (30) of the seat rail profile (14) adjoins the first profile region (16, 20, 22) and has a removal position (30), via which the retaining element (18) can be moved into the removal position by being moved along the ramp element (40) from the retaining position out of the receiving member of the first profile region (16, 20, 22).

3. The vehicle seat (12) as claimed in claim 2,
**characterized in that**
the additional profile region is constructed so as to be open at the removal position (30) in a vertical direction (24) of the seat rail (10, 10', 10"').

4. The vehicle seat (12) as claimed in either claim 2 or 3,
**characterized in that**
the seat rail 10 has at least one ramp element (40) by means of which the retaining element (18) can be moved into at least one removal position by moving it along the ramp element (40) from the retaining position out of the profile region (16, 20, 22), and **in that** the retaining element (18) comprises at least one lower roller (34) which can be rotated about an axis of rotation and by means of which the retaining element (18) can be rolled at least in regions from the retaining position into the removal position, and **in that**
the retaining element (18) comprises upper-side rollers (50) which are arranged at least in regions above the lower rollers (34) in the vertical direction (24).

5. The vehicle seat (12) as claimed in claim 4,
**characterized in that**
the retaining element (18) rolls at least indirectly on the seat rail profile (14) and/or on the ramp element (40) during the movement from the retaining position into the removal position via the lower roller (34).

6. The vehicle seat (12) as claimed in either claim 4 or 5,
**characterized in that**
the lower roller (34) is covered at least in regions in the retaining position by the profile region (16, 20, 22) in a vertical direction (24) of the seat rail (10, 10', 10''').

7. The vehicle seat (12) as claimed in claim 6,
**characterized in that**
the retaining element (18) rolls on the profile region via the upper-side roller (50), which can be rotated about an axis of rotation, at least in regions during the movement along the seat rail profile (14) at a side (54) of the profile region (16, 20, 22) facing away from the first lower roller (34).

## Revendications

1. Siège de véhicule (12) d'un véhicule automobile, présentant un rail de siège (10, 10', 10"') avec un profilé de rail de siège (14) qui présente au moins une région profilée (16, 20, 22) dans laquelle au moins un élément de retenue correspondant (18) du siège de véhicule (12) peut être inséré dans au moins une position de retenue, le siège de véhicule (12) pouvant être déplacé entre une pluralité de positions au moins sensiblement dans la direction longitudinale du véhicule et pouvant être bloqué dans ces positions au niveau du rail de siège (10, 10', 10"') dans la direction longitudinale du véhicule ainsi que dans la direction verticale du véhicule,
**caractérisé en ce que**
le rail de siège (10, 10', 10''') comprend au moins un élément de rampe (40) s'étendant obliquement par rapport à la direction d'étendue (36) du profilé de rail de siège (14), au moyen duquel l'élément de retenue (18) peut être déplacé par déplacement de celui-ci le long de l'élément de rampe (40) de la position de retenue hors de la région profilée (16, 20, 22) dans au moins une position d'enlèvement.

2. Siège de véhicule (12) selon la revendication 1,
**caractérisé en ce que**
la région profilée (16, 20, 22) présente au moins un logement fermé au moins en partie vers le haut dans la direction verticale (24) du rail de siège (10, 10', 10'''), au moyen duquel l'élément de retenue (18) est bloqué ou peut être bloqué dans la position de retenue dans la direction verticale (24) sur le profilé de rail de siège (14), une région profilée supplémentaire du profilé de rail de siège (14) se raccordant à la première région profilée (16, 20, 22), laquelle présente une zone d'enlèvement (30), par le biais de laquelle (30) l'élément de retenue (18), par déplacement de celui-ci (18) le long de l'élément de rampe (40), peut être déplacé de la position de retenue hors du logement de la première région profilée (16, 20, 22) dans la position d'enlèvement.

3. Siège de véhicule (12) selon la revendication 2,
**caractérisé en ce que**
la région profilée supplémentaire est réalisée sous forme ouverte au niveau de la zone d'enlèvement (30) dans la direction verticale (24) du rail de siège (10, 10', 10''').

4. Siège de véhicule (12) selon l'une quelconque des revendications 2 ou 3,
**caractérisé en ce que**
le rail de siège (10) comprend au moins un élément de rampe (40), au moyen duquel l'élément de retenue (18) peut être déplacé par déplacement de celui-ci le long de l'élément de rampe (40) de la position de retenue hors de la région profilée (16, 20, 22) dans au moins une position d'enlèvement, **en ce que** l'élément de retenue (18) comprend des rouleaux inférieurs (34) pouvant tourner autour d'un axe de rotation, au moyen desquels l'élément de retenue (18) peut rouler au moins en partie depuis la position de retenue dans la position d'enlèvement, et **en ce que** l'élément de retenue (18) comprend des rouleaux supérieurs (50) qui sont disposés au moins en partie au-dessus des rouleaux inférieurs (34) dans la direction verticale.

5. Siège de véhicule (12) selon la revendication 4,
**caractérisé en ce que**
l'élément de retenue (18), lors du déplacement de la position de retenue dans la position d'enlèvement par le biais des rouleaux inférieurs (34), roule au moins de manière indirecte sur le profilé de rail de siège (14) et/ou sur l'élément de rampe (40).

6. Siège de véhicule (12) selon l'une quelconque des revendications 4 ou 5,
**caractérisé en ce que**
les rouleaux inférieurs (34), dans la position de retenue, sont retenus au moins en partie par la région profilée (16, 20, 22) dans la direction verticale (24) du rail de siège (10, 10', 10''').

7. Siège de véhicule (12) selon la revendication 6,
**caractérisé en ce que**
l'élément de retenue (18), par le biais du rouleau du côté supérieur (50) pouvant tourner autour d'un axe de rotation, roule sur la région profilée au moins en partie lors du déplacement le long du profilé de rail de siège (14) sur un côté (54) de la région profilée (16, 20, 22) opposé aux rouleaux inférieurs (34).
